# EUROPÄISCHE PATENTSCHRIFT

(11) **EP 1 128 542 B1**
(45) Veröffentlichungstag und Bekanntmachung des Hinweises auf die Patenterteilung: **29.12.2010**
(21) Anmeldenummer: 01103944.3
(22) Anmeldetag: 19.02.2001
(51) Int. Cl.: H02P 3/06, H02K 1/14

(54) **Gebremster Reihenschlussmotor**
Braked series motor
Moteur série freiné

(30) Priorität: 25.02.2000 EP 00103957; 05.07.2000 DE 10032039
(43) Veröffentlichungstag der Anmeldung: 29.08.2001
(73) Patentinhaber: C. & E. Fein GmbH, 73529 Schwäbisch-Gmünd-Bargau (DE)
(72) Erfinder: Meyer, Christoph, 70599 Stuttgart (DE)
(74) Vertreter: Gahlert, Stefan

(56) Entgegenhaltungen:
- WO-A-91/03866
- DE-A- 3 636 555
- DE-A- 4 201 023
- DE-A- 4 333 733
- DE-C- 19 636 519
- US-A- 4 144 482

## Beschreibung

Die Erfindung betrifft einen gebremsten Reihenschlußmotor insbesondere Universalmotor für ein Elektrowerkzeug, mit einem Anker mit einer kommutierenden Ankerspule, der in einem Ständer drehbar gelagert ist und über Bürsten gespeist ist, mit mindestens zwei Feldpolen, von denen jeder ein Polhorn mit einer auflaufenden Kante und ein Polhorn mit einer ablaufenden Kante aufweist, mit einer Feldspule, und mit einer Schalteinrichtung zur Umschaltung zwischen Motorbetrieb und Bremsbetrieb, wobei im Motorbetrieb die Feldspule mit der Ankerspule in einem von einer Versorgungsspannung beaufschlagten Motorstromkreis in Reihe geschaltet ist, und wobei im Bremsbetrieb die Feldspule mit der Ankerspule einen geschlossenen und von der Versorgungsspannung abgetrennten Bremsstromkreis bildet und wobei die Polhörner mit ablaufender Kante gegenüber den Polhörnern mit auflaufender Kante in Umfangsrichtung verkürzt sind oder mindestens eine sich in Umfangsrichtung erstreckende Aussparung aufweisen.

Ein derartiger Reihenschlußmotor ist aus der DE 196 36 519 C1 bekannt.

Bei dem bekannten Motor handelt es sich um ein Universalmotor mit einem Polpaket mit Feldpolanordnungen aus je zwei Polteilen, wobei das Polpaket für eine vorbestimmte Drehrichtung ausgelegt ist und dem Motor eine Schaltungsanordnung zugeordnet ist, die einen zwischen Motor- und Bremsbetrieb mit einem einer Diodenanordnung enthaltendem Strompfad parallel zur Feldspule beinhaltet. Um eine gute Kommutierung sowohl während des Motorbetriebs als auch während des Bremsbetriebs zu erreichen, ist eine Feldzusatzspule vorgesehen, die bei einem speziell gestalteten Polblechpaket an der ablaufenden Kante der beiden Polhörner die Feldspule umschlingt und an der auflaufenden Kante separat auf den Polhörnern aufgenommen ist.

Um eine ausreichende Kommutierung im Motorbetrieb zu gewährleisten, wird bei Universalmotoren normalerweise die Kommutierung der Ankerspule gegenüber der geometrisch neutralen Zone entgegen der Laufrichtung verlegt. Dies geschieht üblicherweise dadurch, daß die Kohlebürsten entgegen der Drehrichtung des Ankers aus der neutralen Zone verschoben werden. Auf diese Weise wird ein vermindertes Bürstenfeuer erreicht, ohne daß Wendepolwicklungen notwendig sind. Soll ein derartig ausgelegter Universalmotor abgebremst werden, indem die Ankerspule oder die Feldspule mittels eines Umschalters umgepolt und der Motor kurzgeschlossen wird, so ergibt sich während der Bremsphase des Motors eine mangelhafte Kommutierung, wenn keine Bürstenverstellung vorgenommen wird oder keine Wendepole vorgesehen werden.

Dieses Problem wird zwar bei dem vorstehend genannten Motor durch die Zusatzspulen in Verbindung mit der speziellen Wicklungsanordnung vermieden, jedoch wird der Aufbau des Motors im Vergleich zu herkömmlichen Universalmotoren, die lediglich mit einer geteilten Feldspule und einer Verlegung der Bürsten aus der geometrisch neutralen Zone entgegen der Laufrichtung des Motors auskommen, erheblich verkompliziert. Darüber hinaus ergibt sich bei gleicher Leistung ein merklich vergrößertes Gewicht bzw. bei gleichbleibendem Gewicht eine verringerte Leistung.

Ein Reihenschlußmotor ähnlicher Art ist aus der WO 91/03866 bekannt. Auch hierbei sind Zusatzwicklungen in Form von Wendepolwicklungen vorgesehen.

Da solche Motoren insbesondere in Elektrowerkzeugen eingesetzt werden, bei denen es auf hohe Leistung bei möglichst geringem Gewicht ankommt, und die in hohen Stückzahlen möglichst kostengünstig gefertigt werden sollen, ist die Verwendung von Wendepolwicklungen oder anderen Zusatzwicklungen zur Vermeidung der geschilderten Kommutierungsprobleme als nachteilig anzusehen.

Der Erfindung liegt somit die Aufgabe zugrunde, einen möglichst kompakt aufgebauten, gebremsten Reihenschlußmotor zu schaffen, der eine ausreichend gute Kommutierung im Motorbetrieb gewährleistet und bei dem ein zu starkes Bürstenfeuer im Bremsbetrieb vermieden wird.

Diese Aufgabe wird bei einem Reihenschlußmotor gemäß der eingangs genannten Art dadurch gelöst, daß die Feldspule keine Zusatzspulen aufweist und daß keine Wendepolwicklungen vorgesehen sind.

Die Aufgabe der Erfindung wird auf diese Weise vollkommen gelöst.

Überraschenderweise hat sich gezeigt, daß durch die Verkürzung der Polhörner an der ablaufenden Kante oder durch die Anordnung von Aussparungen einer ablaufenden Kante der Polhörner praktisch kein nachteiliger Einfluß während des normalen Motorbetriebs auftritt, während gleichzeitig ein verstärktes Bürstenfeuer im Bremsbetrieb vermieden wird. Dabei kann die kommutierende Ankerspule gegenüber der geometrisch neutralen Zone in bekannter Weise entgegen der Laufrichtung verlegt werden, wozu vorzugsweise die Bürsten entgegen der Drehrichtung des Ankers aus der neutralen Zone verdreht angeordnet werden. Grundsätzlich wäre es jedoch auch möglich, die stromwenderseitigen Schaltverbindungen so zu gestalten, daß dies wie eine Bürstenverschiebung wirkt.

Bei einer derartigen Ausgestaltung der Feldpole an den ablaufenden Kanten der Polhörner kann erfindungsgemäß auf Wendepolwicklungen oder andere Zusatzspulen verzichtet werden, da auch auf diese Weise im Bremsbetrieb eine deutlich verbesserte Kommutierung erreicht wird. Im Bremsbetrieb entsteht auf der ablaufenden Seite der Polhörner eine verstärkte Konzentration von magnetischen Feldlinien, während dies im Motorbetrieb auf der auflaufenden Seite der Polhörner erfolgt. Durch die Verkürzung der Polhörner auf der ablaufenden Seite bzw. durch die Verwendung von Aussparungen wird dem in der Motorbetriebsphase verstärkten Bürstenfeuer durch die ungünstige Anordnung der Bürsten entgegengewirkt.

Gleichzeitig ergibt sich eine deutlich verbesserte Selbsterregung für eine selbsterregte Bremsung, so daß eine sichere Abbremsung des Motors bei Umschaltung in den Bremsbetrieb gewährleistet ist.

In bevorzugter Weiterbildung der Erfindung sind an den ablaufenden Kanten der Polhörner jeweils mindestens zwei sich in Umfangsrichtung erstreckende Zungen vorgesehen, zwischen denen die mindestens eine Aussparung gebildet ist.

Auf diese Weise können Beeinträchtigungen des Betriebsverhaltens in der Motorbetriebsphase praktisch vollständig vermieden werden, während gleichzeitig die gewünschten Verbesserungen in der Bremsphase erreicht werden und außerdem eine gute Aufnahme des Feldspulwicklungsteils auf der ablaufenden Kante der Polhörner erreicht werden kann.

Wie bereits erwähnt, ist vorzugsweise die kommutierende Ankerspule gegenüber der geometrisch neutralen Zone entgegen der Laufrichtung verlegt.

Des weiteren sind vorzugsweise Mittel zur Begrenzung des im Bremsbetrieb fließenden Bremsstromes vorgesehen.

Hierzu können in an sich bekannter Weise zwei antiparallel zueinander geschaltete Diodenstrecken verwendet werden, die im Bremsbetrieb parallel zur Feldspule angeschlossen sind.

In weiter bevorzugter Ausgestaltung der Erfindung ist ein netzgespeister Transformator vorgesehen, dessen Sekundärwicklung im Bremsstromkreis parallel zur Feldspule angeschlossen ist, wobei ein gesteuerter Schalter, vorzugsweise ein Transistor, zur Steuerung des im Bremsstromkreis über die Ankerspule und die Feldspule fließenden Stroms vorgesehen ist.

Der gesteuerte Schalter ist in bevorzugter Weiterbildung der Erfindung als Feldeffekttransistor ausgebildet, der mit Source und Drain über eine Diode parallel an die Feldspule angeschlossen ist und den Strom durch die Feldspule in Abhängigkeit vom über die Ankerspule fließenden Strom regelt.

Bei einer derartigen Ausgestaltung wird durch die Sekundärwicklung des Transformators ein Strom in den Bremsstromkreis eingeführt, der eine zuverlässige Einleitung der Bremsung in jedem Falle gewährleistet. Auf diese Weise wird selbst in äußerst ungünstigen Fällen eine sichere Einleitung der Bremsung bei Umschaltung in den Bremsbetrieb sichergestellt. Dabei wird durch den Feldeffekttransistor ermöglicht, den Bremsstrom nachzuregeln, so daß auch bei fortschreitendem Bremsvorgang noch ein starkes Bremsmoment zur Verfügung steht. Hierdurch läßt sich die Bremscharakteristik deutlich verbessern, um eine kurze Bremszeit sicherzustellen. Die Bremscharakteristik läßt sich hierbei so anpassen, daß ein langsames Austrudeln des Motors am Ende der Bremsung vermieden wird.

Hierzu ist der Feldeffekttransistor vorzugsweise mit seinem Gate über einen Spannungsteiler an die Bürsten und somit also an die Ankerspule angeschlossen.

Bei den vorstehend erwähnten Schaltungsvarianten mit einem netzgespeisten Transformator wird durch die im Bremsstromkreis liegende Diode, die mit Drain des Feldeffekttransistors verbunden ist, die Stromrichtung aufgeprägt.

Gemäß einer weiteren Variante der Schaltung wird auf diese im Bremsstromkreis in Reihe liegende Diode verzichtet und statt dessen die Sekundärwicklung des netzgespeisten Transformators über eine Gleichrichterschaltung, bei der es sich vorzugsweise um einen Brückengleichrichter handelt, parallel zur Feldspule angekoppelt, wobei wiederum ein gesteuerter Schalter, vorzugsweise ein Transistor zur Steuerung des im Bremsstromkreis über die Ankerspule und die Feldspule fließenden Stroms vorgesehen ist.

Der gesteuerte Schalter ist vorzugsweise als Feldeffekttransistor ausgebildet, der im Bremsbetrieb mit Source und Drain parallel an die Feldspule angekoppelt ist und den Strom durch die Feldspule in Abhängigkeit vom über die Ankerspule fließenden Strom regelt.

Hierbei ist der Feldeffekttransistor im Bremsbetrieb vorzugsweise mit Source unmittelbar an einem Ende der Feldspule angeschlossen und mit Drain über einen Widerstand an das andere Ende der Feldspule angeschlossen.

In weiter vorteilhafter Ausgestaltung der Erfindung ist die Sekundärwicklung im Bremsstromkreis über einen Brückengleichrichter parallel an die Feldspule angeschlossen, wobei der Pluspol des Brückengleichrichters mit Drain und der Minuspol des Brükkengleichrichters mit Source des Feldeffekttransistors gekoppelt ist.

Mit den vorstehend genannten Merkmalen ergibt sich der Vorteil, daß bei Verzicht auf die im Bremsstromkreis in Reihe liegende Diode die Bremswirkung auch noch im letzten Teil der Abklingphase auftritt, da die Schwellspannung der Diode, die bei etwa 0,7 bis 0,8 Volt liegt, vollständig entfällt und somit die Sperrwirkung bei Erreichen der Schwellspannung während der Abklingphase entfällt.

Des weiteren wird es unabhängig von der magnetischen Remanenz vermieden, daß während der Zeit, während der die Diode gesperrt ist, eine Selbsterregung entgegen der zum Bremsen gewünschten Richtung erfolgt.

Ferner ist vorzugsweise im Bremsstromkreis ein Lastwiderstand vorgesehen, der zwischen einer Bürste und einem Ende der Feldspule über die Diode angeschlossen ist, wobei an einem Ende des Lastwiderstandes der Feldeffekttransistor mit Drain angeschlossen ist, und wobei der Feldeffekttransistor mit Source mit der anderen Bürste und dem anderen Ende der Feldwicklung verbunden ist.

Weitere Merkmale und Vorteile der Erfindung ergeben sich aus der nachfolgenden Beschreibung eines bevorzugten Ausführungsbeispiels. Es zeigen:
- Fig. 1: ein vereinfachtes Schaltbild des erfindungsgemäßen Motors im Bremsbetrieb;
- Fig. 2: eine Vorderansicht des Stators des Motors gemäß Fig. 1;
- Fig. 3: eine Innenansicht auf eines der beiden Polhörner des Stators gemäß Fig. 2, in einer ebenen Abwicklung;
- Fig. 4: ein abgewandeltes Schaltbild eines erfindungsgemäßen Motors im Bremsbetrieb und
- Fig. 5: ein weiter abgewandeltes Schaltbild eines erfindungs- gemäßen Motors im Bremsbetrieb.

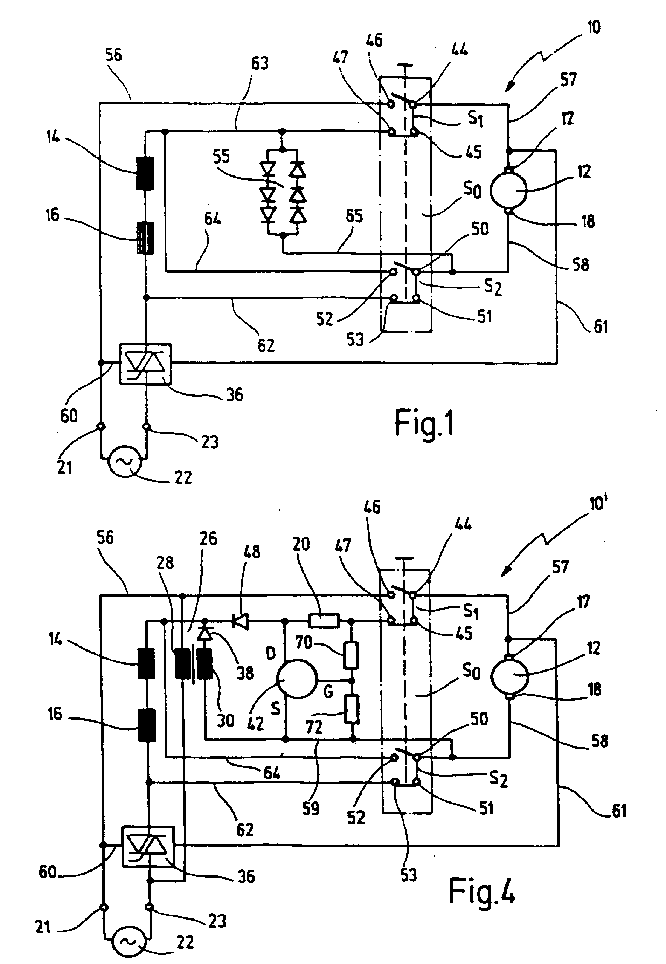

Ein erfindungsgemäßer Reihenschlußmotor ist in Fig. 1 insgesamt mit der Ziffer 10 bezeichnet. Der Motor 10 umfaßt einen Anker mit einer Ankerspule 12, die über einen nicht dargestellten Kommutator und lediglich schematisch angedeutete Bürsten 17, 18 über einen Schalter S₀ im Motorbetrieb in Reihe mit einer Speisespannungsquelle 22 schaltbar ist, die eine Wechselspannung von 230 Volt abgibt.

Bei dem Schalter S₀ handelt es sich um einen zweipoligen Umschalter mit einem ersten Umschalter S₁ und einem zweiten Umschalter S₂. Der erste Pol der Speisespannungsquelle 22 ist über eine Leitung 56 mit einem ersten Umschaltkontakt 46 des ersten Umschalters S₁ verbunden, der bei geschlossenem Schalter S₁ mit dem Kontakt 44 verbunden ist und wiederum über eine Leitung 57 mit einer Bürste 17 gekoppelt ist. Die zweite Bürste 18 ist über eine Leitung 58 mit zwei miteinander im Motorbetrieb verbundenen Kontakten 50, 52 des zweiten Umschalters S₂ verbunden, wobei der Kontakt 52 über eine Leitung 64 mit einem ersten Ende der zweiteilig ausgebildeten Feldspule 14, 16 verbunden ist. Die Feldspule besitzt einen ersten Spulenteil 14, und einen zweiten Spulenteil 16, die miteinander in Reihe liegen, wobei das Ende des zweiten Spulenteils 16 über eine Steuerelektronik 36 mit dem zweiten Pol 23 der Speisespannungsquelle 22 verbunden ist. Die Steuerelektronik 36 ist zusätzlich über eine Steuerleitung 60 mit dem ersten Pol 21 der Speisespannungsquelle 22 und über eine Steuerleitung 61 mit den Kontakten 44 und 45 des ersten Umschalters S₁ gekoppelt.

Die Steuerelektronik 36 dient zur Begrenzung des Anlaufstroms beim Anschalten des Motors, zur Begrenzung der Leerlaufdrehzahl des Motors und verhindert es, daß der Motor anläuft, wenn ein Stecker zur Verbindung mit der Speisespannungsquelle 22 eingesteckt wird, während sich der Schalter S₀ in der Einschaltstellung befindet. Diese an sich bekannte Steuerelektronik 36 ist mit dem zweiten Spulenteil 16 der Feldspule verbunden, während der andere Spulenteil 14, wie bereits erwähnt, über den Schalter S₀ im Motorbetrieb über die Leitung 64 und die Kontakte 50, 52 des zweiten Umschalters S₂ mit der Bürste 18 gekoppelt ist. Durch diese Anordnung wird die Entstörung des Reihenschlußmotors 10 erleichtert.

In dem in Fig. 1 dargestellten Bremsbetrieb sind jedoch die Kontakte 44, 46 des ersten Umschalters S₁ geöffnet, während die weiteren Kontakte 45, 47 des ersten Umschalters S₁ geschlossen sind. Gleichfalls sind im Bremsbetrieb die Kontakte 50, 52 des zweiten Umschalters S₂ geöffnet, während die Kontakte 51, 53 des zweiten Umschalters S₂ geschlossen sind.

Zwischen dem Kontakt 50 des zweiten Umschalters S₂, der mit der Bürste 18 verbunden ist, und dem Ende des ersten Spulenteils 14 ist eine antiparallel geschaltete Diodenstrecke 55 angeschlossen, die über eine Leitung 65 mit dem Kontakt 50 verbunden ist und über eine Leitung 63 mit dem Kontakt 47 des ersten Umschalters S₁ und dem Ende des ersten Spulenteils 14 gekoppelt ist.

Auf diese Weise besteht im Bremsbetrieb ein geschlossener Bremsstromkreis über die beiden Spulenteile 14, 16 der Feldspule, die Leitung 62, die Kontakte 53, 51, 50 des Schalters S₂, die Leitung 58 über die Bürsten 17, 18, den Kommutator und die Ankerspule 12 und die Leitung 57 über die Kontakte 44, 45, 47 des ersten Umschalters S₁ und die Leitung 63 wiederum zum ersten Spulenteil 14. Dabei ist im Bremsbetrieb zusätzlich die antiparallele Diodenstrecke 55 parallel zur Feldspule 14, 16 bzw. zur Ankerspule 12 angeschlossen.

Eine derartige Schaltung ist an sich grundsätzlich bekannt, jedoch werden für gebremste Reihenschlußmotoren in der Regel nach dem Stand der Technik zusätzlich Wendepolwicklungen oder andere Zusatzspulen verwendet, die im Bremsstromkreis liegen.

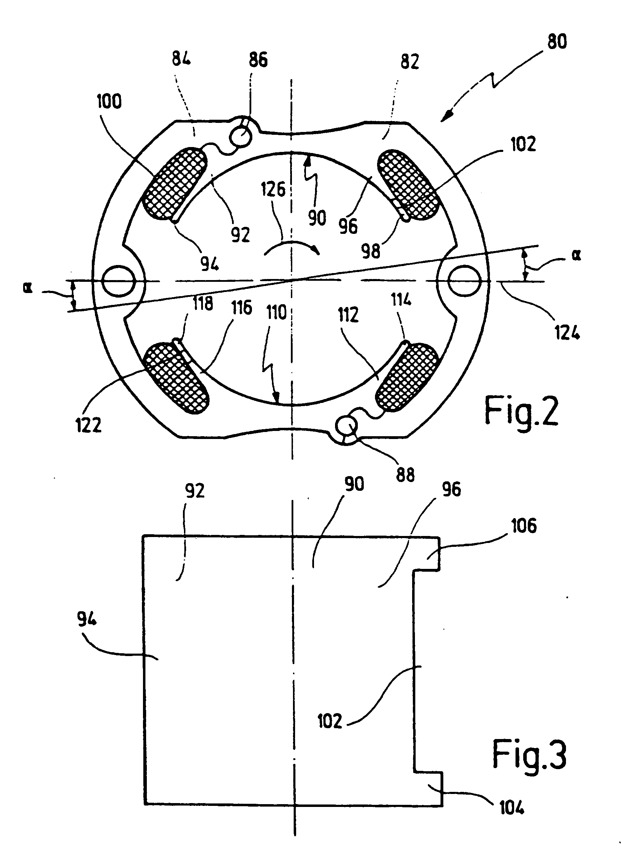

Fig. 2 zeigt nun den Aufbau eines erfindungsgemäßen Stators 80.

Der Stator 80 ist vorzugsweise aus zwei Hälften 82, 84 zusammengesetzt, wie dies im einzelnen aus der DE 195 07 264 A1 bekannt ist. Hierdurch wird die Montage der Spulenteile der Feldwicklungen auf dem Stator 80 erleichtert. Die beiden Hälften 82, 84 werden nach erfolgter Montage der Wicklungspakete 100 durch Stifte 86, 88, die in entsprechende Öffnungen eingesetzt werden, miteinander fest verbunden, so daß der Stator 80 als geschlossenes ringförmiges Joch ausgebildet ist.

Der Stator 80 weist einen ersten Feldpol 90 und einen zweiten, gegenüberliegenden Feldpol 110 auf. Jeder der beiden Feldpole 90, 110 besitzt zwei Polhörner 92, 96 bzw. 112, 116. Die bevorzugte Drehrichtung des Motors ist mit 126 angedeutet. Damit besitzt der erste Feldpol 90 ein Polhorn 92 mit auflaufender Kante 94 und ein Polhorn 96 mit ablaufender Kante 98. Gleichfalls besitzt der zweite Feldpol 110 ein Polhorn 112 mit auflaufender Kante 114 und ein Polhorn 116 mit ablaufender Kante 118.

Die beiden Polhörner 96, 116 mit ablaufender Kante 98 bzw. 118 weisen, in Umfangsrichtung gesehen, jeweils eine Aussparung 102 bzw. 122 auf, wie dies im einzelnen aus Fig. 3 zu ersehen ist. Fig. 3 zeigt eine Ansicht auf den ersten Feldpol 90 von innen, wobei dies in einer ebenen Abwicklung dargestellt ist.

Während das Polhorn 92 auf der Seite der auflaufenden Kante 94 in der üblichen Weise in bekannter Weise aus den Lagen des Blechpakets massiv, d.h. ohne Aussparungen, ausgeführt ist, weist das Polhorn 96 auf der Seite der ablaufenden Kante 98 eine sich in Axialrichtung des Stators 80 erstreckende Aussparung 102 auf, die an den beiden axialen Enden des Polhorns 96 jeweils durch eine in Umfangsrichtung hervorstehende Zunge 104, 106 eingeschlossen ist.

Die Polhörner 92 und 96 sind grundsätzlich symmetrisch zueinander aufgebaut, wobei lediglich das Polhorn 96 an der ablaufenden Kante 98 durch die Aussparung 102 in Umfangsrichtung verkürzt ist, während die Ausdehnung der Zungen 104, 106 dem Umriß des anderen Polhorns 92 entspricht.

In entsprechender Weise ist auch am anderen Polhorn 116 des zweiten Feldpols 110 eine entsprechende Aussparung vorgesehen, die lediglich in Fig. 2 mit der Ziffer 122 angedeutet ist.

In Fig. 2 ist ferner noch die geometrisch neutrale Zone mit der Linie 124 angedeutet. Die Bürsten 17, 18 des Reihenschlußmotors 10 sind entgegen der Drehrichtung 126 um einen Winkel α verschoben angeordnet, wie dies an sich bei derartigen Universalmotoren grundsätzlich bekannt ist, um die Kommutierung im Motorbetrieb zu verbessern und das Bürstenfeuer zu vermindern.

Durch die Aussparungen 102 bzw. 122 auf den ablaufenden Seiten der Polhörner 96 bzw. 116 wird die Kommutierung im Bremsbetrieb erheblich verbessert, ohne daß hierzu Wendepolspulen oder andere Zusatzspulen notwendig sind. Gleichzeitig entstehen praktisch keinerlei Nachteile für den Motorbetrieb.

Es versteht sich, daß die Zungen 104, 106 und die Aussparung 102 gemäß Fig. 3 lediglich beispielhafter Natur sind. So können weitere und anders geformte Zungen vorgesehen sein. Auch können Form und Anordnung der Aussparung bzw. Aussparungen jeweils an der ablaufenden Seite der Polhörner variiert werden.

Mit der erwähnten Gestaltung der Polhörner 96 bzw. 116 an den ablaufenden Kanten 98 bzw. 118 ist gleichfalls eine deutlich verbesserte Selbsterregung im Bremsbetrieb gewährleistet, so daß im einfachsten Fall die Schaltung gemäß Fig. 1 ausreicht, um eine sichere Einleitung der Bremsung bei Umschaltung in den Bremsbetrieb zu gewährleisten.

Eine noch höhere Zuverlässigkeit bezüglich der Einleitung der Bremsung und des weiteren eine besonders vorteilhafte Bremscharakteristik, d.h. des zeitlichen Verlaufs der Bremsung, läßt sich mit der abgewandelten Schaltung gemäß Fig. 4 erreichen, in der ein Reihenschlußmotor insgesamt mit der Ziffer 10' bezeichnet ist.

Hierbei werden für entsprechende Teile entsprechende Bezugsziffern wie bei Fig. 1 verwendet.

Der grundsätzliche Aufbau der Schaltung entspricht der Ausführung gemäß Fig. 1, wobei lediglich auf die antiparallel geschaltete Diodenstrecke 55 verzichtet wurde und statt dessen ein Transformator 26 vorgesehen ist in Verbindung mit einer Feldeffekttransistorschaltung.

Der Transformator 26 ist mit seiner Primärseite 28 unmittelbar an die beiden Pole 21, 23 der Speisespannungsquelle 22 angeschlossen. Mit seiner Sekundärseite 30 ist der Transformator 26 über eine Diode 38 an das eine Ende des ersten Feldspulenteils 14 angeschlossen und an seinem anderen Ende über eine Leitung 59 mit dem Kontakt 50 des zweiten Umschalters S₂ bzw. mit der Leitung 58 verbunden ist, die zur Bürste 18 der Ankerspule 12 führt. Wie in Fig. 4 zu sehen ist, ist im Bremsbetrieb die Bürste 18 über die Leitung 58 und die Kontakte 50, 51, 53 des zweiten Umschalters S₂ und die Leitung 62 gleichfalls mit dem Ende des zweiten Spulenteils 16 der Feldspule verbunden.

Ein Feldeffekttransistor 42 des Typs IRF 540 ist mit Drain D über eine Diode 48 mit dem Ende des ersten Spulenteils 14 und somit gleichfalls mit der Diode 38 gekoppelt. Dabei liegen beide Dioden 38, 48 gemeinsam mit ihren Kathoden an dem Ende des ersten Spulenteils 14. Der Feldeffekttransistor 42 ist mit Source S über die Leitung 59 mit dem Kontakt 50 des zweiten Umschalters S₂ und damit über die Leitung 58 mit der Bürste 18 der Ankerspule 12 gekoppelt. Die Anode der Diode 48 ist über einen Lastwiderstand 20 mit dem Kontakt 47 des ersten Umschalters S₂ verbunden, der in der gezeigten Bremsstellung über die Kontakte 45, 44 mit der Leitung 57 verbunden ist, die zur Bürste 17 führt. Zwischen dem Kontakt 47 des ersten Umschalters S₁ und der Leitung 59, die an den Kontakt 50 des zweiten Umschalters S₂ angeschlossen ist, ist der Feldeffekttransistor 42 mit seinem Gate G über einen Spannungsteiler 70, 72 angeschlossen, der aus einem ersten Widerstand 70, der bspw. ein Kiloohm betragen kann, und einem zweiten Widerstand 72, der bspw. 6 Kiloohm betragen kann. Der Widerstand 70 ist mit einem Ende an den Kontakt 47 des Schalters S₁ angeschlossen und mit seinem anderen Ende mit dem Widerstand 72 verbunden, der mit dem Kontakt 50 des Schalters S₂ verbunden ist. Zwischen den beiden Widerständen 70, 72 ist das Gate G des Feldeffekttransistors angeschlossen. Statt des Widerstandes 70 könnte auch eine Zenerdiode vorgesehen sein, die die gewünschte Schaltspannung erzeugt.

Der Feldeffekttransistor 42 wird an seinem Gate G über den Spannungsteiler 70, 72 angesteuert, von dem die Spannung an der Verbindung der Widerstände 70, 72 abgegriffen wird.

Bei dem Motor 10 gemäß Fig. 4 wird im Bremsbetrieb vom Feldeffekttransistor 42 der Feldstrom geregelt und die Ankerspannung während des Bremsvorgangs annähernd konstant gehalten, bis dieser am Ende des Bremsvorgangs endgültig zusammenbricht.

Die Dimensionierung kann für einen Motor von etwa 2000 Watt Leistungsaufnahme bei 230 Volt Wechselspannung derart ausgelegt werden, daß der Transformator für eine Sekundärspannung von 4 Volt bei einer Leistung von 0,25 Watt ausgelegt ist, wobei als Feldeffekttransistor 42 der MOSFET IRF540 verwendet werden kann, der für einen maximalen Strom von 28 A und eine maximale Verlustleistung von 125 Watt ausgelegt ist. Als Lastwiderwand 20 kann hierbei ein Widerstand von 0,33 Ohm bei einer maximalen Verlustleistung von 10 Watt verwendet werden, und der Spannungsteiler kann, wie bereits erwähnt, aus den beiden Widerständen 70 von 1 Kiloohm und 72 von 6 Kiloohm bestehen.

Während des Bremsvorgangs beginnt der Feldeffekttransistor 42 zu leiten, wenn zwischen Gate G und Source S eine Spannung von etwa 4 Volt über dem Spannungsteiler 70, 72 anliegt. Da am Lastwiderstand 20 eine Spannung anfällt, die von der Größe des durch die Ankerspule 12 fließenden Stroms abhängig ist, wird bei dieser Ausführung die Ankerspannung während des Bremsvorgangs weitgehend konstant gehalten und der Feldstrom vom Feldeffekttransistor 42 geregelt.

Am Ende des Bremsvorgangs fällt die Ankerspannung dann so stark ab, daß der Feldeffekttransistor 42 in den Sperrzustand übergeht, wodurch der durch die Feldspule 14, 16 fließende Feldstrom nochmals kurzzeitig ansteigt, so daß der Bremsvorgang an seinem Ende verstärkt wird.

Eine solche Ausführung ist insbesondere für einen gebremsten Winkelschleifer mit einer hohen Leistungsaufnahme von etwa 2000 Watt vorteilhaft, da sie eine besonders günstige Bremscharakteristik erzeugt.

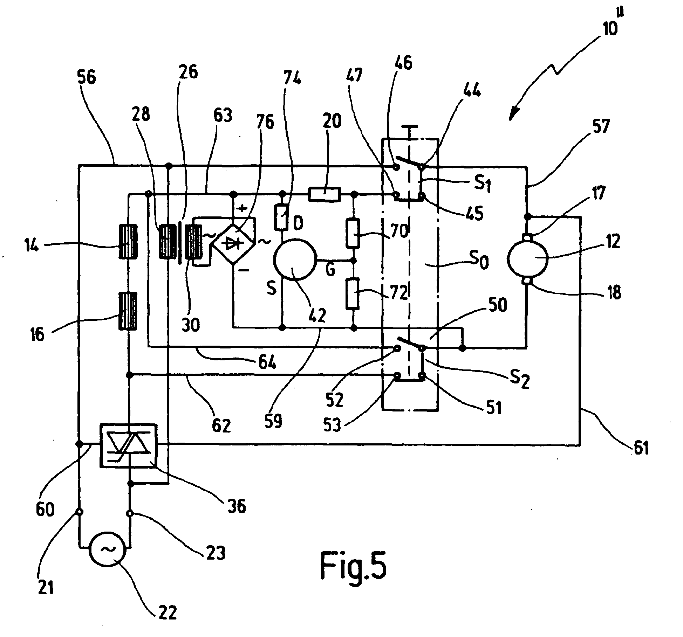

In Fig. 5 ist eine weitere Abwandlung der Schaltung gemäß Fig. 4 dargestellt, in der ein Reihenschlußmotor insgesamt mit der Ziffer 10" bezeichnet ist.

Hierbei werden für entsprechende Teile entsprechende Bezugsziffern wie bei Fig. 4 verwendet.

Der grundsätzliche Aufbau der Schaltung entspricht der Ausführung gemäß Fig. 4, wobei lediglich auf die Dioden 38 und 48 verzichtet wurde und statt dessen die Sekundärwicklung 30 des Transformators 26 über eine Brückengleichrichterschaltung 76 mit der Leitung 63, die mit der Feldspule 14 verbunden ist, einerseits, sowie mit Source des Feldeffekttransistors 42 andererseits verbunden ist. Der Widerstand 20 ist nun unmittelbar mit der Feldspule 14 und dem Pluspol des Brückengleichrichters 76 verbunden. Der Minuspol des Brückengleichrichters 76 ist unmittelbar mit Source des Feldeffekttransistors 42 verbunden. Dagegen ist in Abweichung von der Schaltung gemäß Fig. 4 zwischen Drain des Feldeffekttransistors 42 und dem Ende des Lastwiderstandes 20 bzw. der Feldspule 14 nunmehr ein Widerstand 74 vorgesehen, der bei sonst gleicher Auslegung wie zuvor etwa 0,15 Ohm betragen könnte.

Da bei dieser Schaltung auf die Diode 48 im Bremsstromkreis verzichtet wurde, wird das damit zusammenhängende Problem vermieden, daß bei einem Abfall der Spannung bis auf die Schwellspannung, die bei etwa 0,7 bis 0,8 Volt liegt, der Stromfluß unterbrochen wird. Dies hat zur Folge, daß die Bremswirkung bis zum vollständigen Abklingen in der Bremsphase aufrechterhalten wird. Ferner wird vermieden, daß während der Zeit, während der sich die Diode 48 gemäß Fig. 4 in Sperrichtung befindet, in ungünstigen Fällen eine Selbsterregung in der einer für die Bremswirkung entgegengesetzten Richtung erfolgt.

Für ein zuverlässiges Funktionieren der Schaltung gemäß Fig. 5 ist es zweckmäßig, den Schalter S₀ so auszulegen, daß beim Umschalten vom Motorbetrieb in den Bremsbetrieb nach dem Öffnen der Kontakte 44, 46 und 50, 52 zunächst die Verbindung zwischen den Kontakten 51 und 53 geschlossen wird, bevor die Verbindung zwischen den Kontakten 45 und 47 geschlossen wird.

Durch den Brückengleichrichter 76 wird in Verbindung mit einem derart ausgelegten Schalter S₀ so zu jedem Zeitpunkt der Bremsphase die Richtung der Selbsterregung klar vorbestimmt.

## Patentansprüche

1. Gebremster Reihenschlußmotor, insbesondere Universalmotor für ein Elektrowerkzeug, mit einem Anker mit einer kommutierenden Ankerspule (12), der in einem Ständer (80) drehbar gelagert ist und über Bürsten (17, 18) gespeist ist, mit mindestens zwei Feldpolen (90, 110), von denen jeder ein Polhorn (92, 112) mit einer auflaufenden Kante (94, 114) und ein Polhorn (96, 116) mit einer ablaufenden Kante (98, 118) aufweist, mit einer Feldspule (14, 16), und mit einer Schalteinrichtung (So) zur Umschaltung zwischen Motorbetrieb und Bremsbetrieb, wobei im Motorbetrieb die Feldspule (14, 16) mit der Ankerspule (12) in einem von einer Versorgungsspannung (22) beaufschlagten Motorstromkreis in Reihe geschaltet ist, und wobei im Bremsbetrieb die Feldspule (14, 16) mit der Ankerspule (12) einen geschlossenen und von der Versorgungsspannung (22) abgetrennten Bremsstromkreis bildet, wobei die Polhörner (96, 116) mit ablaufender Kante (98, 118) gegenüber den Polhörnern (92, 112) mit auflaufender Kante (94, 114) in Umfangsrichtung gesehen verkürzt sind oder mindestens eine sich in Umfangsrichtung erstreckende Aussparung (102, 122) aufweisen, **dadurch gekennzeichnet, daß** die Feldspule keine Zusatzspulen aufweist und daß keine Wendepolwicklungen vorgesehen sind.

2. Reihenschlußmotor nach Anspruch 1, **dadurch gekennzeichnet, daß** an den ablaufenden Kanten (98, 118) der Polhörner (98, 118) jeweils mindestens zwei sich in Umfangsrichtung erstreckende Zungen (104, 106) vorgesehen sind, zwischen denen die mindestens eine Aussparung (102, 122) gebildet ist.

3. Reihenschlußmotor nach Anspruch 1 oder 2, **dadurch gekennzeichnet, daß** die kommutierende Ankerspule (12) gegenüber der geometrisch neutralen Zone (124) entgegen der Laufrichtung (126) verlegt ist.

4. Reihenschlußmotor nach einem der vorhergehenden Ansprüche, **dadurch gekennzeichnet, daß** Mittel (55) zur Begrenzung des im Bremsbetrieb fließenden Bremsstroms vorgesehen sind.

5. Reihenschlußmotor nach Anspruch 4, **dadurch gekennzeichnet, daß** ein netzgespeister Transformator (26) vorgesehen ist, dessen Sekundärwicklung (30) im Bremsstromkreis parallel zur Feldspule (14, 16) angeschlossen ist, und daß ein gesteuerter Schalter, vorzugsweise ein Transistor zur Steuerung des im Bremsstromkreis über die Ankerspule (12) und die Feldspule (14, 16) fließenden Stroms vorgesehen ist.

6. Reihenschlußmotor nach Anspruch 5, **dadurch gekennzeichnet, daß** der gesteuerte Schalter als Feldeffekttransistor (42) ausgebildet ist, der mit Source (S) und Drain (D) über eine Diode (48) parallel an die Feldspule (14, 16) angeschlossen ist und den Strom durch die Feldspule (14, 16) in Abhängigkeit vom über die Ankerspule (12) fließenden Strom regelt.

7. Reihenschlußmotor nach Anspruch 5 oder 6, **dadurch gekennzeichnet, daß** die Sekundärwicklung (30) im Bremsstromkreis über einen Gleichrichter (38) parallel an die Feldspule angeschlossen ist.

8. Reihenschlußmotor nach Anspruch 5, 6 oder 7, **dadurch gekennzeichnet, daß** im Bremsstromkreis der Feldeffekttransistor (42) mit seinem Gate (G) über einen Spannungsteiler (70, 72) an die Bürsten (17, 18) angeschlossen ist.

9. Reihenschlußmotor nach Anspruch 8, **dadurch gekennzeichnet, daß** im Bremsstromkreis ein Lastwiderstand (20) zwischen einer Bürste (17) und einem Ende der Feldspule (14, 16) über die Diode (48) angeschlossen ist, daß an einem Ende des Lastwiderstandes (20) der Feldeffektransistor (42) mit Drain (D) angeschlossen ist, und daß der Feldeffekttransistor (42) mit Source (S) mit der anderen Bürste (18) und dem anderen Ende der Feldwicklung (14, 16) verbunden ist.

10. Reihenschlußmotor nach Anspruch 4, **dadurch gekennzeichnet, daß** ein netzgespeister Transformator (26) vorgesehen ist, dessen Sekundärwicklung (30) über eine Gleichrichterschaltung (76) im Bremsstromkreis parallel zur Feldspule (14, 16) angeschlossen ist, und daß ein gesteuerter Schalter, vorzugsweise ein Transistor zur Steuerung des im Bremsstromkreis über die Ankerspule (12) und die Feldspule (14, 16) fließenden Stroms vorgesehen ist.

11. Reihenschlußmotor nach Anspruch 10, **dadurch gekennzeichnet, daß** der gesteuerte Schalter als Feldeffekttransistor (42) ausgebildet ist, der im Bremsbetrieb mit Source (S) und Drain (D) parallel an die Feldspule (14, 16) angekoppelt ist und den Strom durch die Feldspule (14, 16) in Abhängigkeit vom über die Ankerspule (12) fließenden Strom regelt.

12. Reihenschlußmotor nach Anspruch 10 oder 11, **dadurch gekennzeichnet, daß** der Feldeffekttransistor (42) im Bremsbetrieb mit Source (S) unmittelbar mit einem Ende der Feldspule (14, 16) verbunden ist, und daß der Feldeffekttransistor (42) mit Drain (D) über einen Widerstand (74) mit dem anderen Ende der Feldspule (14, 16) verbunden ist.

13. Reihenschlußmotor nach Anspruch 11 oder 12, **dadurch gekennzeichnet, daß** die Sekundärwicklung (30) im Bremsstromkreis über einen Brückengleichrichter (76) parallel an die Feldspule angeschlossen ist, wobei der Pluspol der Brückengleichrichters (76) mit Drain (D) und der Minuspol des Brückengleichrichters mit Source (S) gekoppelt ist.

14. Reihenschlußmotor nach einem der Ansprüche 5 bis 13, **dadurch gekennzeichnet, daß** im Bremsstromkreis der Feldeffekttransistor (42) mit seinem Gate (G) über einen Spannungsteiler (70, 72) an die Bürsten (17, 18) angeschlossen ist.

## Claims

1. A retarded series-wound motor, in particular a universal motor for an electric power tool, comprising an armature including a commutating armature winding (12), which is mounted rotatably within a stator (80) and is fed via brushes (17, 18), further comprising at least two field poles (90, 110), each of which having a pole horn (92, 112) with a run-on edge (94, 114) and a pole horn (96, 116) having a run-off edge (98, 118), further comprising a field winding (14, 16), and a switching means (So) for switching between a motor operation mode and a braking mode, wherein, when being in the motor operation mode, the field winding (14, 16) is connected in series with the armature winding (12) and the field winding (14, 16) in a motor circuit powered by the voltage source (22), and wherein when being in the braking mode the field winding (14, 16) is connected in series with the armature winding (12) and the field winding (14, 16) in a closed braking circuit which is separated from the voltage source (22), wherein the pole horns (96, 116) with run-on edge (98, 118) are shortened in circumferential direction or have at least one cutout (102, 122) extending in circumferential direction, **characterized in that** the field winding does not have any additional windings and that there are not provided any commutating windings.

2. Series motor according to claim 1, **characterized in that** on the run-off edges (98, 118) of the pole horns (98, 118) at least two tongues (104, 106) extending in circumferential direction are respectively provided, between which at least one cutout (102, 122) is formed.

3. Series motor according to claim 1 or 2, **characterized in that** the commutating armature winding (12) is displaced with respect to the geometrically neutral zone (124) against the running direction (126).

4. Series motor according to any of the preceding claims, **characterized in that** means (55) are provided for restricting the current flowing in the braking mode within the brake circuit.

5. Series motor according to claim 4, **characterized in that** a mains-operated transformer (26) is provided, the secondary winding (30) of which is connected in the braking circuit in parallel to the field winding (14, 16), and **in that** a controlled switch, preferably a transistor, is provided for controlling the current flowing in the braking circuits via the armature winding (12) and the field winding (14, 16).

6. Series motor according to claim 5, **characterized in that** the controlled switch is configured as a field effect transistor (42) which is connected with its source (S) and its drain (D) via a diode (48) in parallel to the field winding (14, 16) and which controls the current flowing through the field winding (14, 16) depending on the current flowing across the armature winding (12).

7. Series motor according to claim 5 or 6, **characterized in that** the secondary winding (30) within the braking circuit is connected via a rectifier (38) in parallel to the field winding.

8. Series motor according to claim 5, 6 or 7, **characterized in that** within the braking circuit a field effect transistor (42) is connected with its gate (G) via a voltage divider (70, 72) to the brushes (17, 18).

9. Series motor according to claim 8, **characterized in that** within the braking circuit a load resistor (20) is connected between one brush (17) and one end of the field winding (14, 16) via a diode (48), **in that** the field effect transistor (42) is connected with its drain (D) to one end of the load resistor (20), and **in that** the field effect transistor (42) is connected with its source (S) to the other brush (18) and the other end of the field winding (14, 16).

10. Series motor according to claim 4, **characterized in that** a mains-powered transformed (26) is provided, the secondary winding (30) of which is connected via a rectifier circuit (76) in parallel to the field winding (14, 16) within the braking circuit, and **in that** a controlled switch, preferably a transistor, is provided for controlling the current flowing within the braking circuit via the armature winding (12) and the field winding (14, 16).

11. Series motor according to claim 10, **characterized in that** the controlled switch is configured as a field effect transistor (42) which in the braking mode is coupled with its source (S) and its drain (D) in parallel to the field winding (14, 16) and which controls the current flowing through the field winding (14, 16) depending on the current flowing via the armature winding (12).

12. Series motor according to claim 10 or 11, **characterized in that** the field effect transistor (42) in the braking mode is connected with its source (S) directly to one end of the field winding (14, 16), and **in that** the field effect transistor (42) is connected with its drain (D) via a resistor (74).

13. Series motor according to claim 11 or 12, **characterized in that** the secondary winding (30) is connected in the braking circuit via a bridge rectifier (76) in parallel to the field winding, wherein the positive pole of the bridge rectifier (76) is coupled with drain (D) and the negative pole of the bridge rectifier is coupled with source (S).

14. Series motor according to any of claims 5 to 13, **characterized in that** in the braking circuit the field effect transistor (42) is coupled with its gate (G) via a voltage divider (70, 72) to the brushes (17, 18).

## Revendications

1. Moteur série freiné, en particulier moteur universel pour un outil électrique, comportant un induit avec une bobine d'induit (12) propre à commuter, lequel est monté rotatif dans un stator (80) et est alimenté par l'intermédiaire de balais (17, 18), comportant au moins deux pôles de champ (90, 110), chacun d'eux comportant une corne polaire (92, 112) avec un bord d'entrée (94, 114) et une corne polaire (96, 116) avec un bord de sortie (98, 118), comportant une bobine de champ (14, 16) et comportant un dispositif de commutation (S0) pour commuter entre un mode moteur et un mode frein, sachant que dans le mode moteur la bobine de champ (14, 16) est montée en série avec la bobine d'induit (12) dans un circuit de courant moteur sollicité par une tension d'alimentation (22), et sachant que dans le mode frein, la bobine de champ (14, 16) forme avec la bobine d'induit (12) un circuit de courant de freinage fermé et séparé de la tension d'alimentation (22), les cornes polaires (96, 116) avec le bord d'entrée (98, 118) étant plus courtes dans la direction circonférentielle que les cornes polaires (92, 112) avec le bord de sortie (94, 114) ou ayant au moins un évidement (102, 122) s'étendant dans la direction circonférentielle, **caractérisé en ce que** la bobine de champ ne comporte pas de bobines supplémentaires et **en ce qu'**il n'est pas prévu d'enroulements de commutation.

2. Moteur série selon la revendication 1, **caractérisé en ce que** sur les bords de sortie (98, 118) des cornes polaires (98, 118) sont prévues respectivement au moins deux pattes (104, 106), qui s'étendent dans la direction circonférentielle et entre lesquelles est formé ledit au moins un évidement (102, 122).

3. Moteur série selon la revendication 1 ou 2, **caractérisé en ce que** la bobine d'induit (12) propre à commuter est décalée par rapport à la zone (124) géométriquement neutre dans le sens opposé au sens de rotation (126).

4. Moteur série selon l'une quelconque des revendications précédentes, **caractérisé en ce qu'**il est prévu des moyens (55) pour limiter le courant de freinage circulant dans le mode frein.

5. Moteur série selon la revendication 4, **caractérisé en ce qu'**il est prévu un transformateur (26) alimenté par le réseau, dont l'enroulement secondaire (30) est raccordé en parallèle à la bobine de champ (14, 16) dans le circuit de courant de freinage, et **en ce qu'**il est prévu un commutateur commandé, de préférence un transistor pour commander le courant circulant dans le circuit de courant de freinage via la bobine d'induit (12) et la bobine de champ (14, 16).

6. Moteur série selon la revendication 5, **caractérisé en ce que** le commutateur commandé est réalisé sous la forme d'un transistor à effet de champ (42), qui est raccordé avec la source (S) et le drain (D) via une diode (48) en parallèle à la bobine de champ (14, 16), et régule le courant à travers la bobine de champ (14, 16) en fonction du courant circulant via la bobine d'induit (12).

7. Moteur série selon la revendication 5 ou 6, **caractérisé en ce que** l'enroulement secondaire (30) dans le circuit de courant de freinage est raccordé en parallèle à la bobine de champ via un redresseur (38).

8. Moteur série selon la revendication 5, 6 ou 7, **caractérisé en ce que**, dans le circuit de courant de freinage, le transistor à effet de champ (42) est raccordé avec sa gâchette (G) aux balais (17, 18) via un diviseur de tension (70, 72).

9. Moteur série selon la revendication 8, **caractérisé en ce que**, dans le circuit de courant de freinage, une résistance de charge (20) est raccordée via la diode (48) entre un balai (17) et une extrémité de la bobine de champ (14, 16), **en ce que** le transistor à effet de champ (42) est raccordé avec le drain (D) à une extrémité de la résistance de charge (20), et **en ce que** le transistor à effet de champ (42) avec la source (S) est relié à l'autre balai (18) et à l'autre extrémité de la bobine de champ (14, 16).

10. Moteur série selon la revendication 4, **caractérisé en ce qu'**il est prévu un transformateur (26) alimenté par le réseau, dont l'enroulement secondaire (30) est raccordé en parallèle à la bobine de champ (14, 16) via un circuit de redresseur (76) dans le circuit de courant de freinage, et **en ce qu'**il est prévu un commutateur commandé, de préférence un transistor pour commander le courant circulant dans le circuit de courant de freinage via la bobine d'induit (12) et la bobine de champ (14, 16).

11. Moteur série selon la revendication 10, **caractérisé en ce que** le commutateur commandé est réalisé sous la forme d'un transistor à effet de champ (42) qui, dans le mode frein, est couplé avec la source (S) et le drain (D) en parallèle à la bobine de champ (14, 16), et régule le courant à travers la bobine de champ (14, 16) en fonction du courant circulant via la bobine d'induit (12).

12. Moteur série selon la revendication 10 ou 11, **caractérisé en ce que**, dans le mode frein, le transistor à effet de champ (42) est relié avec la source (S) directement à une extrémité de la bobine de champ (14, 16), et **en ce que** le transistor à effet de champ (42) est relié avec le drain (D) via une résistance (74) à l'autre extrémité de la bobine de champ (14, 16).

13. Moteur série selon la revendication 11 ou 12, **caractérisé en ce que** l'enroulement secondaire (30) dans le circuit de courant de freinage est raccordé en parallèle à la bobine de champ via un redresseur en pont (76), le pôle plus du redresseur en pont (76) étant couplé avec le drain (D) et le pâle moins du redresseur en pont étant couplé avec la source (S).

14. Moteur série selon l'une quelconque des revendications 5 à 13, **caractérisé en ce que**, dans le circuit de courant de freinage, le transistor à effet de champ (42) est raccordé avec sa gâchette (G) aux balais (17, 18) via un diviseur de tension (70, 72).
